(19) Europäisches Patentamt
European Patent Office
Office européen des brevets

(11) **EP 4 797 629 A1**

(12) **EUROPEAN PATENT APPLICATION**
published in accordance with Art. 153(4) EPC

(43) Date of publication:
**26.08.2026 Bulletin 2026/35**

(21) Application number: **24884673.5**

(22) Date of filing: **28.10.2024**

(51) International Patent Classification (IPC):
***H04L 25/02*** *(2006.01)*

(52) Cooperative Patent Classification (CPC):
**H04B 7/0456; H04B 7/06; H04L 25/02**

(86) International application number:
**PCT/CN2024/127823**

(87) International publication number:
**WO 2025/092670 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311469859**

(71) Applicant: **HUAWEI TECHNOLOGIES CO., LTD.**
**Shenzhen 518129 (CN)**

(72) Inventors:
- **YE, Chencheng**
  **Shenzhen, Guangdong 518129 (CN)**
- **XU, Jun**
  **Shenzhen, Guangdong 518129 (CN)**
- **WANG, Xiaohan**
  **Shenzhen, Guangdong 518129 (CN)**
- **JIN, Huangping**
  **Shenzhen, Guangdong 518129 (CN)**

(74) Representative: **Maiwald GmbH**
**Elisenhof**
**Elisenstraße 3**
**80335 München (DE)**

# (54) CHANNEL ESTIMATION METHOD AND APPARATUS, AND COMMUNICATION SYSTEM AND STORAGE MEDIUM

(57) This application relates to the field of communication technologies, and discloses a channel estimation method, an apparatus, a communication system, and a storage medium, to improve a reference signal multiplexing capability, and resolve a problem that uplink reference signals cannot be transmitted to a base station in a timely manner when a quantity of the uplink reference signals is excessively large. The method includes: A terminal device reports, to a network device, first indication information indicating a channel characteristic of a channel between the terminal device and the network device, and obtains a characteristic weight, of the channel, determined by the network device based on the first indication information, and then determines a first uplink reference signal based on a pilot base sequence of the terminal device and the characteristic weight, and sends the first uplink reference signal to the network device.

Network device
Terminal device
S601: First indication information
S602: Determine a characteristic weight of a channel based on the first indication information
S603: Second indication information
S604: Obtain the characteristic weight of the channel between the terminal device and the network device
S605: First uplink reference signal

FIG. 6

EP 4 797 629 A1

## Description

This application claims priority to Chinese Patent Application No. 202311469859.2, filed with the China National Intellectual Property Administration on November 2, 2023 and entitled "CHANNEL ESTIMATION METHOD, APPARATUS, COMMUNICATION SYSTEM, AND STORAGE MEDIUM", which is incorporated herein by reference in its entirety.

## TECHNICAL FIELD

This application relates to the field of communication technologies, and in particular, to a channel estimation method, an apparatus, a communication system, and a storage medium.

## BACKGROUND

With continuous development of communication technologies, 5th generation (5th generation, 5G) communication systems have higher requirements on spectral efficiency. To improve the spectral efficiency of the 5G communication system, a massive multiple-input multiple-output (multiple-input multiple-output, MIMO) technology emerges accordingly.

When the MIMO technology is applied, a base station (base station, BS) needs to precode data before sending the data to a user equipment (user equipment, UE). However, in a precoding process, the base station may perform channel estimation on an uplink channel based on an uplink reference signal sent by the terminal device, namely, a sounding reference signal (sounding reference signal, SRS), to obtain channel state information (channel state information, CSI), and select an appropriate precoding matrix based on the CSI to precode the data.

Terminal devices may send uplink reference signals to the base station through time division multiplexing, frequency division multiplexing, or code division multiplexing. When the terminal devices send the uplink reference signal to the base station through code division multiplexing, to enable the uplink reference signals to be transmitted on a same resource element (resource element, RE), the uplink reference signals may be orthogonally multiplexed in a discrete Fourier transform (discrete Fourier transform, DFT) domain, that is, the uplink reference signals are orthogonally multiplexed in delay domain. That the uplink reference signals are orthogonally multiplexed in the DFT domain may include: selecting a vector from a DFT matrix as a weight, transforming the uplink reference signal by using the weight, and obtaining, based on a result obtained through transformation, an equivalent channel corresponding to a channel carrying the uplink reference signal.

The DFT domain is a manner of representing a channel transform domain in a fixed form. However, for different channels, the manner of representing the channel transform domain in the fixed form is not necessarily a manner with a strongest multiplexing capability. In other words, a code division multiplexing capability corresponding to the DFT domain is not an optimal manner. Consequently, uplink reference signals cannot be transmitted to the base station in a timely manner when a quantity of the uplink reference signals is excessively large, that is, a quantity of signals for multiplexing is large.

## SUMMARY

Embodiments of this application provide a channel estimation method, an apparatus, a communication system, and a storage medium, to resolve a problem that uplink reference signals cannot be transmitted to a base station in a timely manner when a quantity of the uplink reference signals is excessively large.

To achieve the foregoing objective, embodiments of this application provide the following technical solutions.

According to a first aspect, a channel estimation method is provided. The method may be performed by a terminal device; may be performed by a module used in a terminal device, for example, a chip, a chip system, or a circuit; or may be implemented by a logical module or software that can implement all or a part of functions of the terminal device. This is not limited herein. For ease of description, the following uses an example in which the method is performed by the terminal device for description.

The method includes: reporting, to a network device, first indication information indicating a channel characteristic of a channel between the terminal device and the network device; and obtaining a characteristic weight, of the channel, determined based on the first indication information; and then determining a first uplink reference signal based on a pilot base sequence and the characteristic weight, and sending the first uplink reference signal to the network device.

In the foregoing technical solution, the first uplink reference signal is generated based on the pilot base sequence and the characteristic weight, and the characteristic weight is determined by the network device based on the channel characteristic of the channel. It can be learned that, in this application, the characteristic weight is not simply obtained from a DFT matrix, but is determined based on the channel characteristic of the channel. To be specific, the network device may design the characteristic weight based on the channel characteristic, to make the characteristic weight better meet the

channel characteristic of the corresponding channel. In other words, a capability of multiplexing uplink reference signals corresponding to the characteristic weight in the channel characteristic is optimal. Therefore, according to the channel estimation method provided in this application, a code division multiplexing capability present when the uplink reference signals are transmitted on a same pilot resource or channel can be effectively improved, so that uplink reference signals can still be transmitted to a base station in a timely manner when a quantity of the uplink reference signals is excessively large.

In an optional implementation, the first indication information indicates an eigenbasis of the channel or a second uplink reference signal. The eigenbasis of the channel may also be understood as an eigenbasis of a downlink channel between the terminal device and the network device, and the second uplink reference signal of the channel may be understood as a reference signal of an uplink channel between the terminal device and the network device.

In the foregoing technical solution, based on channel reciprocity, to be specific, a characteristic that channel characteristics of the uplink channel and the downlink channel are basically the same, an eigenbasis of the uplink channel may be reported to indicate the channel characteristic of the uplink channel, or a second reference signal of the uplink channel may be reported to indicate the channel characteristic of the uplink channel, so that the network device determines the characteristic weight of the channel based on the channel characteristic of the uplink channel or the downlink channel. In this way, a plurality of application scenarios are compatible, and diversity and flexibility of reporting the first indication information are improved.

In an optional implementation, when the channel includes a time-domain channel, the eigenbasis of the channel includes a time-domain basis. When the channel includes a frequency-domain channel, the eigenbasis of the channel includes a frequency-domain basis. When the channel includes a time-frequency-domain channel, the eigenbasis of the channel includes a time-frequency-domain basis.

In the foregoing technical solution, uplink reference signal multiplexing may be implemented in any one of time domain, frequency domain, or time-frequency domain. In this way, a plurality of multiplexing scenarios can be compatible, and diversity and flexibility of implementation of this solution are improved.

In an optional implementation, when obtaining the characteristic weight of the channel between the terminal device and the network device, the terminal device may receive second indication information indicating the characteristic weight, and then obtain the characteristic weight of the channel between the terminal device and the network device based on the second indication information.

In the foregoing technical solution, the terminal device may directly obtain the characteristic weight from the second indication information, and transform the pilot base sequence based on the characteristic weight to obtain the first uplink reference signal, so that efficiency of generating the first uplink reference signal can be effectively improved, and efficiency of performing channel estimation by the base station can be effectively improved.

In an optional implementation, when obtaining the characteristic weight of the channel between the terminal device and the network device, the terminal device may further receive second indication information indicating an equivalent basis of the channel, and then obtain the characteristic weight of the channel between the terminal device and the network device based on the equivalent basis and the eigenbasis.

In the foregoing technical solution, the characteristic weight may be determined by indicating the equivalent basis. Because the equivalent basis is obtained through determining based on the eigenbasis and the characteristic weight, for example, the equivalent basis may be obtained by multiplying the eigenbasis by the characteristic weight, the characteristic weight may be obtained in a plurality of manners, so that diversity and flexibility of implementation of this solution are improved.

In an optional implementation, the eigenbasis may include a plurality of bases, the second indication information may further indicate a first basis, and the first basis is a basis in the eigenbasis. When the characteristic weight of the channel between the terminal device and the network device based on the equivalent basis and the eigenbasis is obtained, the characteristic weight of the channel between the terminal device and the network device may be obtained based on the equivalent basis and the first basis.

In the foregoing technical solution, because the equivalent basis of the channel is determined based on the characteristic weight and the first basis, optionally, the first basis may be an eigenbasis that is in a plurality of eigenbases and that causes low indication overheads (or referred to as signaling overheads) of the equivalent basis, to further reduce signaling overheads in a process of indicating the equivalent basis.

In an optional implementation, the second indication information may indicate a DFT decomposition matrix of the equivalent basis of the channel.

In the foregoing technical solution, the equivalent basis of the channel may be indicated based on the DFT decomposition matrix of the equivalent basis. Because a quantity of non-zero elements in the DFT decomposition matrix is less than a quantity of non-zero elements in the equivalent basis, overheads of the DFT decomposition matrix of the equivalent basis are less than those of the equivalent basis. Therefore, the characteristic weight is further determined by indicating the DFT decomposition matrix of the equivalent basis, so that signaling overheads in an interaction process can be further reduced, and fewer communication resources are used.

In an optional implementation, when the first indication information includes the eigenbasis of the channel, before reporting the first indication information indicating the channel characteristic of the channel between the terminal device and the network device, the terminal device may further receive a downlink reference signal from the network device, and determine the eigenbasis of the channel based on the downlink reference signal.

In the foregoing technical solution, the terminal device may receive the downlink reference signal to perform channel estimation based on the downlink reference signal, to obtain the channel characteristic of the channel, and further obtain the eigenbasis of the channel through decomposition based on the channel characteristic of the channel. In this way, the terminal device can obtain an accurate eigenbasis based on the reference signal.

According to a second aspect, a channel estimation method is provided, which is applied to a network device, and includes: after receiving first indication information that is from a terminal device and that indicates a channel characteristic of a channel between a terminal device and the network device, determining a characteristic weight of the channel based on the first indication information, and then sending, to the terminal device, second indication information indicating the characteristic weight.

In the foregoing technical solution, the characteristic weight is not simply obtained from a DFT matrix, but is determined based on the channel characteristic of the channel. To be specific, the network device may design the characteristic weight based on the channel characteristic, to make the characteristic weight better meet the channel characteristic of the corresponding channel. In other words, a capability of multiplexing uplink reference signals corresponding to the characteristic weight in the channel characteristic is optimal. Therefore, according to the channel estimation method provided in this application, a code division multiplexing capability present when the uplink reference signals are transmitted on a same pilot resource or channel can be effectively improved, so that uplink reference signals can still be transmitted to a base station in a timely manner when a quantity of the uplink reference signals is excessively large.

In an optional implementation, the first indication information indicates an eigenbasis of the channel or a second uplink reference signal. The eigenbasis of the channel may also be understood as an eigenbasis of a downlink channel between the terminal device and the network device, and the second uplink reference signal of the channel may be understood as a reference signal of an uplink channel between the terminal device and the network device.

In the foregoing technical solution, based on channel reciprocity, to be specific, a characteristic that channel characteristics of the uplink channel and the downlink channel are basically the same, an eigenbasis of the uplink channel may be reported to indicate the channel characteristic of the uplink channel, or the reference signal of the uplink channel may be reported to indicate the channel characteristic of the uplink channel, so that the network device determines the characteristic weight of the channel based on the channel characteristic of the uplink channel or the downlink channel. In this way, a plurality of application scenarios are compatible, and diversity and flexibility of reporting the first indication information are improved.

In an optional implementation, when the channel includes a time-domain channel, the eigenbasis of the channel includes a time-domain basis. When the channel includes a frequency-domain channel, the eigenbasis of the channel includes a frequency-domain basis. When the channel includes a time-frequency-domain channel, the eigenbasis of the channel includes a time-frequency-domain basis.

In the foregoing technical solution, uplink reference signal multiplexing may be implemented in any one of time domain, frequency domain, or time-frequency domain. In this way, a plurality of multiplexing scenarios can be compatible, and diversity and flexibility of implementation of this solution are improved.

In an optional implementation, when the second indication information is sent to the terminal device, the second indication information that carries the characteristic weight may be sent to the terminal device.

In the foregoing technical solution, the network device may directly send, to the terminal device, the second indication information that carries the characteristic weight, so that the terminal device can directly obtain the characteristic weight from the second indication information, and transform a pilot base sequence based on the characteristic weight to obtain a first uplink reference signal, so that efficiency of generating the first uplink reference signal can be effectively improved, and efficiency of performing channel estimation by the base station can be effectively improved.

In an optional implementation, the second indication information may indicate an equivalent basis of the channel, and the equivalent basis of the channel is determined based on the characteristic weight and the eigenbasis.

In the foregoing technical solution, the characteristic weight may be determined by indicating the equivalent basis. Because the equivalent basis is obtained through determining based on the eigenbasis and the characteristic weight, for example, the equivalent basis may be obtained by multiplying the eigenbasis by the characteristic weight, the characteristic weight may be obtained in a plurality of manners, so that diversity and flexibility of implementation of this solution are improved.

In an optional implementation, the eigenbasis includes a plurality of bases, the second indication information further indicates a first basis, and the first basis is a basis in the eigenbasis, and correspondingly, the equivalent basis of the channel is determined based on the characteristic weight and the first basis.

In the foregoing technical solution, because the equivalent basis of the channel is determined based on the

characteristic weight and the first basis, optionally, the first basis may be an eigenbasis that is in a plurality of eigenbases and that causes low indication overheads (or referred to as signaling overheads) of the equivalent basis, to further reduce signaling overheads in a process of indicating the equivalent basis.

In an optional implementation, the second indication information may indicate a DFT decomposition matrix of the equivalent basis of the channel.

In the foregoing technical solution, the equivalent basis of the channel may be indicated based on the DFT decomposition matrix of the equivalent basis. Because a quantity of non-zero elements in the DFT decomposition matrix is less than a quantity of non-zero elements in the equivalent basis, overheads of the DFT decomposition matrix of the equivalent basis are less than those of the equivalent basis. Therefore, the characteristic weight is further determined by indicating the DFT decomposition matrix of the equivalent basis, so that signaling overheads in an interaction process can be further reduced, and fewer communication resources are used.

In an optional implementation, after receiving the first uplink reference signal from the terminal device, the network device may further perform channel estimation on the channel between the terminal device and the network device based on the eigenbasis of the channel and the first uplink reference signal.

In the foregoing technical solution, the network device may receive the first uplink reference signal, to perform channel estimation on the channel between the terminal device and the network device based on the eigenbasis of the channel and the first uplink reference signal. In this way, standard processing procedures for channel estimation can be compatible.

According to a third aspect, a channel estimation apparatus is provided. The apparatus is located in a terminal device, and includes a functional unit configured to perform any method provided in the first aspect, and an action performed by each functional unit is implemented by hardware or implemented by hardware by executing corresponding software.

The apparatus includes a transceiver module and a processing module. The transceiver module is configured to report first indication information to a network device, where the first indication information indicates a channel characteristic of a channel between the terminal device and the network device. The processing module is configured to obtain a characteristic weight of the channel between the terminal device and the network device, where the characteristic weight of the channel is determined based on the first indication information. The processing module is further configured to generate a first uplink reference signal, where the first uplink reference signal is determined based on a pilot base sequence of the terminal device and the characteristic weight. The transceiver module is further configured to send the first uplink reference signal to the network device.

According to a fourth aspect, a channel estimation apparatus is provided. The apparatus is located in a network device, and includes a functional unit configured to perform any method provided in the first aspect, and an action performed by each functional unit is implemented by hardware or implemented by hardware by executing corresponding software.

The apparatus includes a transceiver module and a processing module.

The transceiver module is configured to receive first indication information from a terminal device, where the first indication information indicates a channel characteristic of a channel between the terminal device and the network device. The processing module is configured to determine a characteristic weight of the channel based on the first indication information. The transceiver module is further configured to send second indication information to the terminal device, where the second indication information indicates the characteristic weight.

According to a fifth aspect, a terminal device is provided. The terminal device includes at least one processor, and the at least one processor is coupled to at least one memory. The at least one processor is configured to execute a computer program or instructions stored in the at least one memory, to enable the terminal device to perform any channel estimation method provided in the first aspect.

According to a sixth aspect, a network device is provided. The network device includes at least one processor, and the at least one processor is coupled to at least one memory. The at least one processor is configured to execute a computer program or instructions stored in the at least one memory, to enable a transmit end to perform any channel estimation method provided in the second aspect.

According to a seventh aspect, a communication system is provided. The communication system includes a terminal device and a network device. The terminal device is configured to perform any channel estimation method provided in the first aspect, and the network device is configured to perform any channel estimation method provided in the second aspect.

According to an eighth aspect, a computer-readable storage medium is provided, including computer-executable instructions. When the computer-executable instructions are run on a computer, the computer is enabled to perform any channel estimation method provided in the first aspect and the second aspect.

According to a ninth aspect, a chip is provided. The chip includes a processor and an interface circuit. The interface circuit is configured to: receive code instructions, and transmit the code instructions to the processor. The processor is configured to run the code instructions to perform any channel estimation method provided in the first aspect

and the second aspect.

According to a tenth aspect, a computer program product is provided, including computer-executable instructions. When the computer-executable instructions are run on a computer, the computer is enabled to perform any channel estimation method provided in the first aspect and the second aspect.

It should be noted that, for technical effects brought by any one of the implementations of the third aspect to the tenth aspect, refer to the technical effects brought by the corresponding implementations of the first aspect and the second aspect. Details are not described herein again.

## BRIEF DESCRIPTION OF DRAWINGS

FIG. 1 is a schematic interaction flowchart of SRS channel estimation in a related technology;
FIG. 2 is a diagram of a structure in an orthogonal multiplexing manner in a related technology;
FIG. 3 is a diagram of a structure in code division multiplexing in a related technology;
FIG. 4 is a diagram of an application scenario of a communication system according to an embodiment of this application;
FIG. 5 is a diagram of a structure of a communication system according to an embodiment of this application;
FIG. 6 is a schematic interaction flowchart of a channel estimation method according to an embodiment of this application;
FIG. 7 is a diagram of a structure of a channel estimation apparatus according to an embodiment of this application; and
FIG. 8 is a diagram of a structure of a channel estimation apparatus according to an embodiment of this application.

## DESCRIPTION OF EMBODIMENTS

In descriptions of this application, unless otherwise specified, "/" indicates "or". For example, A/B may indicate A or B. "And/or" in this specification describes only an association relationship between associated objects and indicates that three relationships may exist. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "example" or "for example" indicate giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

"Indicate" may include a direct indication and an indirect indication, or may include an explicit indication and an implicit indication. The description "specific indication information indicates A" or "indication information of A" may include that the indication information directly indicates A or indirectly indicates A, but does not necessarily indicate that the indication information carries A. Information indicated by specific information (for example, configuration information in the following descriptions) is referred to as to-be-indicated information. In a specific implementation process, the to-be-indicated information may be indicated in a plurality of manners, for example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or another attribute. Moreover, specific indication manners may alternatively be various existing indication manners, for example but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different pieces of information may be indicated in different manners. In the specific implementation process, a required indication manner may be selected according to a specific requirement.

The selected indication manner is not limited in embodiments of this application. In this way, the indication manner in embodiments of this application should be understood as covering various methods that can enable a to-be-indicated party to learn of the to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmit end device by sending the configuration information to a receive end device. The configuration information may include, for example but not limited to, one of or a combination of at least two of radio resource control signaling, media access control (Medium Access Control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

With continuous development of communication technologies, 5G communication systems have higher requirements on system capacity and spectral efficiency. To improve the spectral efficiency of the 5G communication system, a MIMO technology emerges accordingly. When the MIMO technology is applied, a base station needs to precode data based on CSI of a channel before sending the data to a UE. However, in a time division duplexing (time division duplexing, TDD) system, an uplink channel and a downlink channel have reciprocity. Therefore, in a precoding process, the base station may perform SRS channel estimation on the uplink channel based on an uplink reference signal sent by a terminal device, to obtain the CSI, and select an appropriate precoding matrix based on the CSI to precode the data.

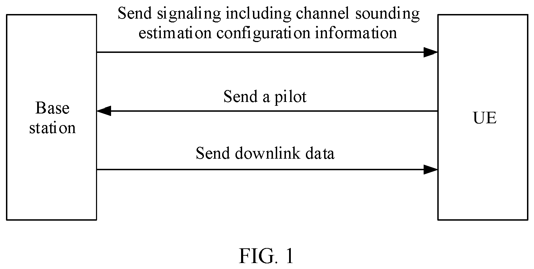

FIG. 1 is a schematic interaction flowchart in which a base station performs SRS channel estimation on an uplink channel in a related technology. As shown in FIG. 1, the base station may first send signaling including channel sounding (sounding) estimation configuration information to a UE, where the signaling may include a time identifier, a channel identifier, and an uplink reference signal resource identifier. After receiving the signaling, the UE may send, when a current moment is consistent with a time corresponding to the time identifier, an uplink reference signal to the base station on a channel corresponding to the channel identifier by using a pilot resource corresponding to the uplink reference signal resource identifier. After receiving the uplink reference signal, the base station may perform pilot measurement by using the uplink reference signal, and perform SRS channel estimation on the channel based on a pilot measurement result, to obtain CSI of the channel. Then, the base station may select, by using the CSI of the channel, an appropriate precoding matrix to precode downlink data that is sent to the UE, and send the downlink data to the UE after the precoding is completed.

In the foregoing process, the UE needs to occupy the corresponding pilot resource to send the uplink reference signal to the base station. In a scenario in which a plurality of UEs send uplink reference signals to the base station, to distinguish between the uplink reference signals that are sent by different UEs, the UEs may send the uplink reference signals to the base station in a manner of orthogonally multiplexing the uplink reference signals (or referred to as an orthogonal multiplexing manner), so that the base station can distinguish, from received signals, a received signal corresponding to an uplink reference signal on each pilot resource, and perform channel estimation. For example, it is assumed that an uplink reference signal sent on a $k^{th}$ pilot resource is $s_k$. The base station may distinguish a received signal $y_k$ on the $k^{th}$ pilot resource from received signals based on orthogonal multiplexing of pilot resources, and perform channel estimation based on $y_k = h_k s_k$ to obtain a channel $h_k$ corresponding to the $k^{th}$ pilot resource.

Optionally, the orthogonal multiplexing manner may include time division multiplexing, frequency division multiplexing, or code division multiplexing.

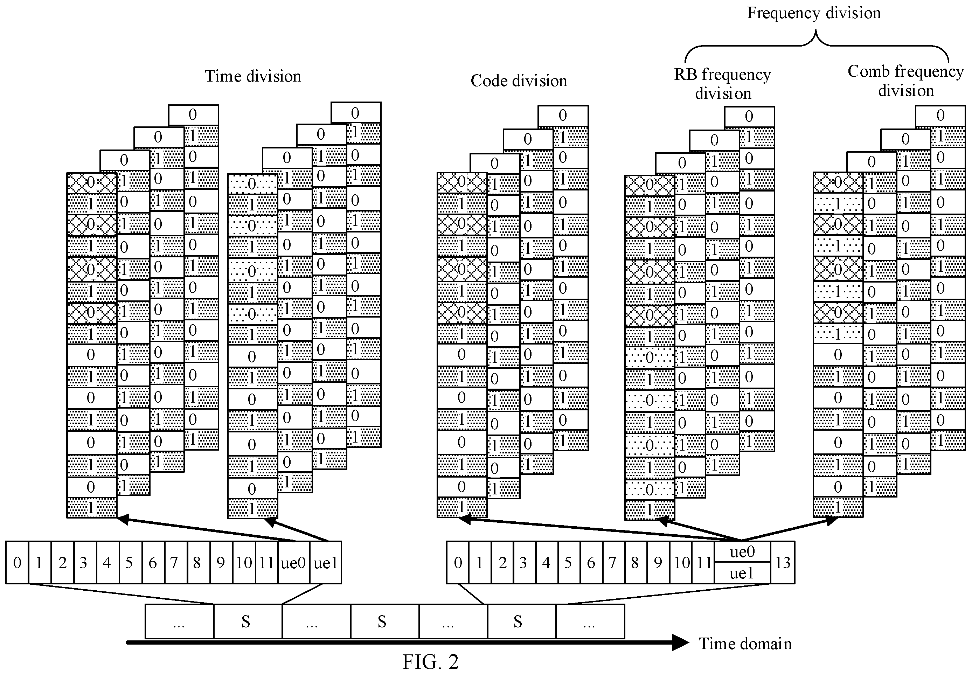

The time division multiplexing means that uplink reference signals may be distributed in different orthogonal frequency division multiplexing (orthogonal frequency division multiplexing, OFDM) symbols of different slots (slots), and correspondingly, a base station may distinguish between received signals of the uplink reference signals based on different slots and different OFDM symbols. For example, in time division multiplexing shown in FIG. 2, uplink reference signals sent by a UE 0 and a UE 1 respectively occupy OFDM symbols 12 and 13.

The frequency division multiplexing may include resource block (resource block, RB) frequency division and comb frequency division (or referred to as sparse division). The RB frequency division means that uplink reference signals may be distributed on different RBs, and correspondingly, a base station may distinguish between received signals of the uplink reference signals based on different RBs. The sparse division means that uplink reference signals may be distributed on different resource elements (resource element, RE) of a same RB, and correspondingly, a base station may distinguish between received signals of the uplink reference signals based on different REs. For example, as shown in FIG. 2, uplink reference signals sent by the UE 0 and the UE 1 respectively occupy different REs of a same RB.

The code division multiplexing means that orthogonal codes is constructed through cyclic shifting, enabling uplink reference signals to be orthogonal in delay domain, so that a UE can send the uplink reference signals to the base station on a same RE resource.

In conclusion, pilot resources for the time division multiplexing and the frequency division multiplexing are

different and are inherently orthogonal. Therefore, when sending uplink reference signals to the base station in a time division or frequency division manner, the UE may use different time-frequency resources to implement pilot resource multiplexing. During the code division multiplexing, the UE uses a same pilot resource (or referred to as a time-frequency resource). In this case, to implement code division multiplexing of uplink reference signals, transform processing (for example, DFT processing) is performed on the uplink reference signals, so that the uplink reference signals are orthogonal in delay domain (or referred to as a DFT domain). The following describes a process of code division multiplexing of an uplink reference signals.

It is assumed that pilot resources multiplexed when a plurality of UEs send uplink reference signals in the code division multiplexing manner are N resource elements (resource elements, REs), and frequency-domain channels on the N REs may be represented as a column vector $H = (h_1, h_2, ..., h_N)^T$. An N-dimensional DFT matrix is represented as $D = (D_0, D_1, ..., D_{N-1})$, where $D_k = \left(1, e^{-\frac{k}{N}2\pi j}, e^{-\frac{2k}{N}2\pi j}, \ldots, e^{-\frac{(N-1)k}{N}2\pi j}\right)^T$ is a k^th DFT vector, and N DFT vectors in the DFT matrix are orthogonal to each other. It is assumed that a transform form of a DFT domain of a frequency-domain channel H may be represented as $H = DC$, where C is a DFT domain channel coefficient, $C = (c_1, c_2, ..., c_K, 0, 0, ..., 0)^T$, and a quantity of non-zero coefficients in C is determined based on a delay spread of the channel. The delay spread may be a difference between a maximum transmission delay and a minimum transmission delay. A larger delay spread indicates a larger quantity of non-zero coefficients in C. On the contrary, a smaller delay spread indicates a smaller quantity of non-zero coefficients in C. Herein, a position of the non-zero coefficient in C is merely an example.

It is assumed that a UE sends an uplink reference signal $s_n$ on an n^th RE. In this case, the uplink reference signal $s_n$ is multiplied by a weight $e^{-\frac{(n-1)k}{N}2\pi j}$, and a received signal received by a base station may be represented as $y_n = h_n e^{-\frac{(n-1)k}{N}2\pi j} s_n$. Correspondingly, that the UE sends the uplink reference signal $s_n$ on the N REs may be equivalent to that the UE sends the uplink reference signal $s_n$ on a channel $\tilde{H} = \left(h_1, h_2 e^{-\frac{k}{N}2\pi j}, \ldots, h_N e^{-\frac{(N-1)k}{N}2\pi j}\right)^T$, that is, equivalent to that delay shift (or referred to as delay domain shift) is performed, in time domain, on the N REs (or referred to as channels) that send the uplink reference signal. Based on $H = DC$ and $C = (c_1, c_2, ..., c_K, 0, 0, ..., 0)^T$, an equivalent channel $\tilde{H} = D\tilde{C}$ may be obtained, where $\tilde{C} = (0, ..., 0, \tilde{c}_{k+1}, \tilde{c}_{k+2}, ..., \tilde{c}_{k+K}, 0, ..., 0)^T$, and $\tilde{c}_{k+1} = c_1$, $\tilde{c}_{k+2} = \tilde{c}_2$, ..., and $\tilde{c}_{k+K} = c_K$.

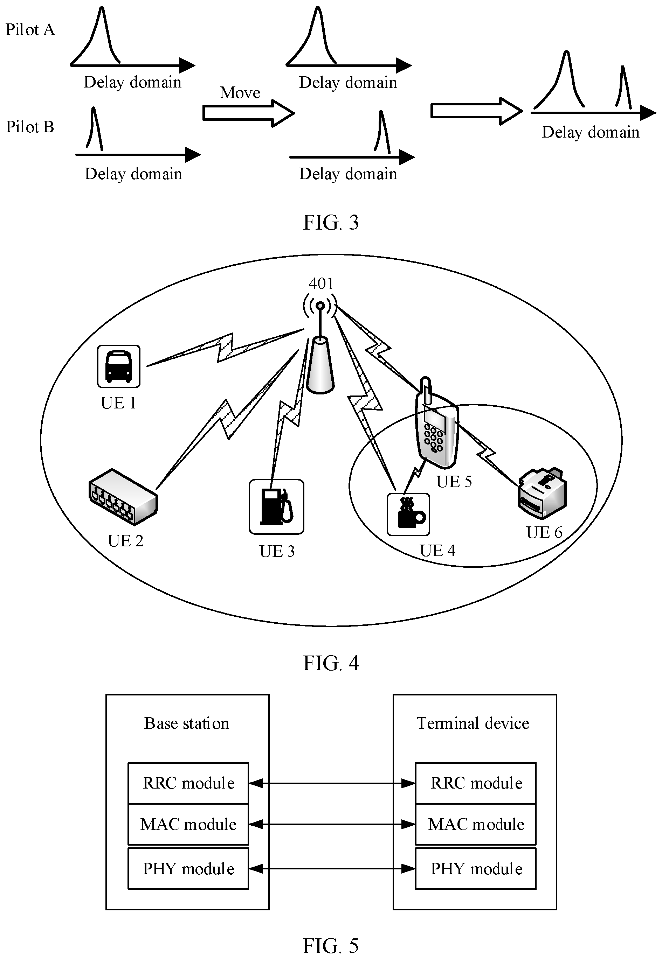

It can be learned from the foregoing descriptions that, when sending the uplink reference signal, the UE additionally multiplies the uplink reference signal by the weight, so that the channel for sending the uplink reference signal (or understood as a pilot resource corresponding to the uplink reference signal) is shifted in delay domain, and the channel for sending the uplink reference signal is changed, enabling channels for sending uplink reference signals by different UEs on a same pilot resource to be orthogonal, so that a base station side distinguishes, based on the orthogonal channels, between the uplink reference signals sent by different UEs, to implement code division multiplexing on the same pilot resource. For example, as shown in FIG. 3, an uplink reference signal A and an uplink reference signal B are sent to the base station on a same pilot resource (or referred to as time-frequency resource/channel) in the code division multiplexing manner. Originally, delays corresponding to channels of a UE 1 and a UE 2 are the same. As a result, if the uplink reference signal A and the uplink reference signal B are sent on the same time-frequency resource, the base station side cannot distinguish the uplink reference signal A and the uplink reference signal B from signals received on the time-frequency resource. In this case, the uplink reference signal B may be additionally multiplied by the weight in the foregoing manner, to change a channel corresponding to the uplink reference signal B, so that a channel corresponding to the uplink reference signal A and the channel corresponding to the uplink reference signal B may be shifted in delay domain, and the channel corresponding to the uplink reference signal A and the channel corresponding to the uplink reference signal B are orthogonal. In this case, the UE 1 and the UE 2 may respectively send the uplink reference signal A and the uplink reference signal B to the base station by using the same time-frequency resource. After receiving signals on the time-frequency resource, the base station may process the received signals based on an equivalent channel corresponding to each UE according to a channel estimation formula $y_k = h_k s_k$, to obtain the channel corresponding to the uplink reference signal A and the channel corresponding to the uplink reference signal B.

It can be learned from the foregoing descriptions that the channel may be obtained based on the DFT matrix and the non-zero coefficient in the DFT domain coefficient C. A smaller quantity of transform domain non-zero coefficients corresponding to the channel indicates a larger quantity of channels that can be simultaneously measured on the same time-frequency resource and a better code division multiplexing capability of the uplink reference signal. However, the DFT domain is a manner of representing a channel transform domain in a fixed form. For different channels, the manner of representing the channel transform domain in the fixed form is not necessarily a manner with a strongest multiplexing

capability. In other words, a code division multiplexing capability corresponding to the DFT domain is not an optimal manner. Consequently, uplink reference signals cannot be transmitted to the base station in a timely manner when a quantity of the uplink reference signals is excessively large, that is, a quantity of signals for multiplexing is large. For example, it is assumed that orthogonal multiplexing of four equivalent channels can be implemented based on a quantity of DFT vectors and a delay spread status, that is, a maximum code division multiplexing capability is 4. In this case, if there are eight UEs that need to transmit uplink reference signals on a same pilot resource in the code division multiplexing manner, the transmission cannot be implemented.

In view of this, embodiments of this application provide a channel estimation method. A terminal device may report, to a network device, first indication information indicating a channel characteristic of a channel between the terminal device and the network device. The network device may determine a characteristic weight of the channel based on the first indication information, and send second indication information indicating the characteristic weight to the terminal device. After obtaining the characteristic weight, the terminal device may determine a first uplink reference signal based on a pilot base sequence and the characteristic weight, and send the first uplink reference signal to the network device.

In this way, in this application, the characteristic weight is not simply obtained from a DFT matrix, but is determined based on the channel characteristic of the channel. To be specific, the network device may design the characteristic weight based on the channel characteristic, to make the characteristic weight better meet the channel characteristic of the corresponding channel. In other words, a capability of multiplexing uplink reference signals corresponding to the characteristic weight in the channel characteristic is optimal. Therefore, according to the channel estimation method provided in this application, a code division multiplexing capability present when uplink reference signals are transmitted on a same pilot resource or channel can be effectively improved, so that uplink reference signals can still be transmitted to a base station in a timely manner when a quantity of the uplink reference signals is excessively large.

FIG. 4 is a diagram of an application scenario of a communication system according to an embodiment of this application. As shown in FIG. 4, in the diagram of the application scenario, a network device 401 and terminal devices UE 1 to UE 6 are included.

Optionally, the terminal device in this application may be a user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a compute device or another processing device connected to a wireless modem, a vehicle-mounted device, a vehicle-mounted transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an uncrewed aerial vehicle, a robot, a smart point of sale (point of sale, POS) machine, a customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal with a communication function in the internet of things (internet of things, IoT), for example, a terminal in V2X (for example, an internet of vehicles device), a terminal in D2D communication, or a terminal in M2M communication. The terminal device may be mobile or fixed.

A form of the terminal device is not limited in embodiments of this application. An apparatus configured to implement a function of the terminal device may be a terminal device, or may be an apparatus, for example, a chip system, that can support the terminal device in implementing the function. The apparatus may be mounted in the terminal device or used together with the terminal device. In this embodiment of this application, the chip system may include a chip, or may include a chip and another discrete component.

Optionally, the network device in this application may be a device configured to communicate with a terminal device, for example, may include an evolved NodeB (NodeB, eNB, or e-NodeB, evolutional NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in an NR system; may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like; or may include a base station in a non-terrestrial network (non-terrestrial network, NTN), that is, may be deployed on a flight platform or a satellite. In the NTN, the network device may be used as a layer 1 (L1) relay (relay), may be used as a base station, or may be used as an integrated access

and backhaul (integrated access and backhaul, IAB) node. Alternatively, the network device may be a device that is in the IoT and that implements a function of a base station, for example, a device that is in uncrewed aerial vehicle communication, V2X, D2D, or machine-to-machine (machine-to-machine, M2M) communication and that implements the functions of the base station.

In some embodiments, the terminal device may include the UE 1 to the UE 6 shown in FIG. 4. In the communication system, the UE 1 to the UE 6 may send uplink data to the network device 401. After receiving the uplink data sent by the UE 1 to the UE 6, the network device 401 may send downlink data to the UE 1 to the UE 6.

In some embodiments, the UE 4 to the UE 6 in the terminal device 402 may also form a communication system. In the communication system, the UE 1 to the UE 6 may send uplink data to the network device 401. After receiving the uplink data sent by the UE 1 to the UE 6, the network device 401 may send downlink data to the UE 1, the UE 2, the UE 3, and the UE 5, and the UE 5 may send the downlink data to the UE 4 and the UE 6.

To support data transmission between the terminal device and a base station, the terminal device and the base station may include a protocol layer shown in FIG. 5. FIG. 5 is a diagram of a structure of a communication system according to an embodiment of this application. As shown in FIG. 5, in the diagram of the structure, a network device and a terminal device are included. The network device is an entity, for example, a base station, that is on a network side and that is configured to: transmit or receive a signal. The terminal device is an entity, for example, a UE, that is on a user side and that is configured to: receive or transmit a signal.

Both the network device and the terminal device may include a radio resource control (radio resource control, RRC) module, a MAC module, and a physical (Physical, PHY) layer module. The RRC module is a module configured to send and receive RRC signaling by the network device and the terminal device. The MAC module is a module configured to send and receive MAC-CE signaling by the network device and the terminal device. The PHY module is a module configured to send and receive uplink control signaling, downlink control signaling, uplink data, and downlink data by the network device and the terminal device.

In this embodiment of this application, first indication information reported by the terminal device may be carried in the RRC signaling, the MAC-CE signaling, a physical uplink control channel (Physical Uplink Control Channel, PUCCH), or a physical uplink shared channel (Physical Uplink Shared Channel, PUSCH), and second indication information sent by the network device may be carried in the RRC signaling, the MAC-CE signaling, a physical downlink control channel (Physical Downlink Control Channel, PDCCH), or a physical downlink shared channel (Physical Downlink Shared Channel, PDSCH).

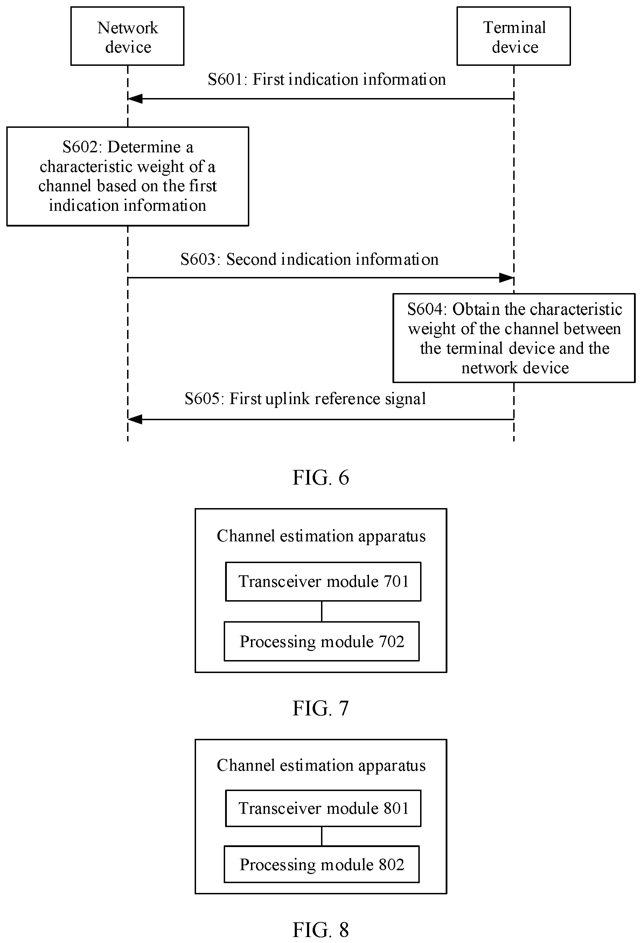

Based on the communication system shown in FIG. 4, the following describes a channel estimation method provided in an embodiment of this application. FIG. 6 is a schematic interaction flowchart of a channel estimation method according to an embodiment of this application. As shown in FIG. 6, the method includes the following steps.

S601: A terminal device reports first indication information to a network device, and correspondingly, the network device receives the first indication information from the terminal device.

The first indication information indicates a channel characteristic of a channel between the terminal device and the network device.

The terminal device may be any one of a UE 1 to a UE 6 in FIG. 4. The network device may be a base station in FIG. 4. The terminal device supports sending an uplink reference signal to the network device in a code division multiplexing manner, where the uplink reference signal includes a pilot sequence or a pilot base sequence. It should be understood that, in a code division multiplexing process, a plurality of UEs may simultaneously send uplink reference signals by using a same pilot resource or channel. In the embodiment shown in FIG. 6, a process in which one UE sends an uplink reference signal is used as an example for description. For a process in which another UE sends an uplink reference signal, refer to this manner.

In this embodiment of this application, through division based on a transmission direction of data on a channel, the channel between the terminal device and the network device may include an uplink channel, and may also include a downlink channel. This is not limited. The uplink channel may be a channel used by the terminal device to send data to the network device, or may be understood as a channel from the terminal device to the network device. The downlink channel may be a channel on which the network device sends data to the terminal device, or may be understood as a channel from the network device to the terminal device. Because channels have reciprocity, channel characteristics of an uplink channel and a downlink channel between a same terminal device and a same network device may be the same, or may have a specific association relationship. Related descriptions of the channel characteristic may be as described above. Details are not described again.

Through division based on a domain corresponding to a channel, the channel between the terminal device and the network device may include a time-domain channel, a frequency-domain channel, and a time-frequency-domain channel.

Through division based on a transmission direction of data on a channel and a domain corresponding to a channel, the channel between the terminal device and the network device may include a time-domain channel corresponding to an uplink channel, a frequency-domain channel corresponding to an uplink channel, a time-fre-

quency-domain channel corresponding to an uplink channel, a time-domain channel corresponding to a downlink channel, a frequency-domain channel corresponding to a downlink channel, and a time-frequency-domain channel corresponding to a downlink channel.

In this embodiment of this application, the first indication information may directly or indirectly indicate the channel characteristic of the channel.

When the channel between the terminal device and the network device is an uplink channel, the first indication information may include or indicate an eigenbasis of the uplink channel or a second uplink reference signal. The second uplink reference signal may be used to determine the eigenbasis of the uplink channel, and the second uplink reference signal may be pre-specified in a protocol.

Optionally, when the first indication information includes or indicates the second uplink reference signal of the uplink channel, when sending the second uplink reference signal to the network device, the terminal device may send the second uplink reference signal to the network device in a time division multiplexing manner, a frequency division multiplexing manner, or a code division multiplexing manner in a related technology. For example, when the terminal device sends the second uplink reference signal to the network device in the code division multiplexing manner, the terminal device may select a vector from a DFT matrix as a weight, and transform the second uplink reference signal by using the weight. In this way, the second uplink reference signal can be orthogonally multiplexed in delay domain, so that the second uplink reference signal can be transmitted to the network device on a same RE.

When the channel between the terminal device and the network device is a downlink channel, the first indication information may include or indicate an eigenbasis of the downlink channel, or the first indication information may directly or indirectly indicate a channel characteristic of the downlink channel.

Optionally, the eigenbasis may be obtained by performing singular value decomposition on a statistical covariance matrix of the channel. It is assumed that the terminal device or the network device obtains T channel samples, which are represented as a channel matrix $\mathrm{H_t} \in \mathbb{C}^{\mathrm{P_{CSI-RS}} \times \mathrm{N_3}}$, where t11, 2, ..., or T, and *N* is a quantity of channel elements. The device calculates the statistical covariance matrix $R = \frac{1}{\mathrm{T}} \sum_{\mathrm{t}=1}^{\mathrm{T}} \mathrm{H_t} \mathrm{H_t}^H$ of the channel, and performs singular value decomposition on *R*, to obtain first *K* eigenvectors $U_1$, $U_2$, ..., and $U_3$ corresponding to largest eigenvalues of *R*.

Based on a case in which the channel between the terminal device and the network device may include the time-domain channel, the frequency-domain channel, or the time-frequency-domain channel, the eigenbasis may include a frequency-domain basis, a time-domain basis, or a time-frequency-domain basis, and the channel element may be a channel frequency-domain element, a channel time-domain element, or a channel time-frequency element.

Optionally, the network device sends a downlink reference signal to the terminal device, and the terminal device determines the eigenbasis of the channel between the terminal device and the network device based on the downlink reference signal, and then reports the first indication information to the network device based on the determined eigenbasis.

Specifically, the downlink reference signal may alternatively be described as a pilot that is used to measure CSI and that is sent by the network device to the terminal device. The downlink reference signal may be specifically channel state information-reference information (Channel State Information-Reference Signal, CSI-RS). After receiving the CSI-RS, the terminal device may measure the CSI-RS to obtain a downlink channel H, and after a plurality of times of measurement, determine a statistical covariance matrix of the channel based on a plurality of samples of the channel H, to determine the eigenbasis of the channel between the terminal device and the network device.

In the foregoing technical solution, the first indication information may include or indicate the eigenbasis of the channel, where the eigenbasis is an eigenvector of the channel in feature transform domain, and a degree of sparsity of the channel in feature transform domain is higher than that in DFT domain. In other words, in comparison with the DFT domain, a quantity of eigen-coefficients used to indicate the channel in feature transform domain is smaller. For example, for a same channel, the channel in DFT domain needs to be indicated by using five DFT vectors and corresponding coefficients, while the channel in the feature transform domain needs to be represented by using only three eigenbases and corresponding coefficients. Therefore, when the terminal device transforms the pilot base sequence based on a characteristic weight determined based on the eigenbasis of the channel, a quantity of obtained equivalent channels that are orthogonal to each other may be further increased, so that a code division multiplexing capability present when uplink reference signals are transmitted on a same pilot resource or channel is improved.

In an optional implementation, before the terminal device reports the first indication information indicating the channel characteristic of the channel between the terminal device and the network device, the terminal device may further receive the downlink reference signal from the network device, and determine the eigenbasis of the channel based on the downlink reference signal.

S602: The network device determines the characteristic weight of the channel based on the first indication

information.

Specifically, in some embodiments, when the first indication information includes the eigenbasis of the channel, after receiving the first indication information, the network device may determine the characteristic weight of the channel based on the eigenbasis of the channel included in the first indication information.

In some other embodiments, when the first indication information includes the second uplink reference signal, after receiving the first indication information, the network device may first determine the eigenbasis of the channel between the terminal device and the network device based on the second uplink reference signal included in the first indication information, and then determine the characteristic weight of the channel based on the eigenbasis of the channel.

In an optional implementation, the network device determines the characteristic weight of the channel based on the eigenbasis of the channel. It is assumed that the eigenbasis is multiplied by the characteristic weight element-wisely to obtain an equivalent basis. To ensure high channel estimation accuracy, an inner product between different equivalent bases needs to be minimized while an inner product of the equivalent basis needs to be maximized. In addition, the characteristic weight needs to satisfy a terminal transmit power constraint. Therefore, the characteristic weight needs to meet the following conditions:

$$\max_{\mathbf{P}} \sum_{ij} \left| U_{ij} \odot P_i \right|^2$$

$$\text{s.t.} \left( U_{ij} \odot P_i \right)^H \left( U_{mn} \odot P_m \right) = 0, \forall i \neq m, \forall j \neq n$$

$$|P_i|^2 \leq P_{max}, \forall i$$

*i* represents an SRS port sequence number, j represents an eigenbasis sequence number, $U_{ij}$ represents the eigenbasis, $\boldsymbol{P_i}$ represents the characteristic weight, ⊙ represents element-wise multiplication, $P_{max}$ represents maximum transmit power of the terminal device, $U_{mn}$ represents an eigenbasis other than $U_{ij}$, and $P_m$ represents a characteristic weight other than $\boldsymbol{P_i}$.

S603: The network device sends second indication information to the terminal device, and correspondingly, the terminal device receives the second indication information from the network device.

The second indication information indicates the characteristic weight.

In an optional implementation, that the second indication information indicates the characteristic weight may include but is not limited to the following two cases.

A: The second indication information may carry the characteristic weight.

B: The second indication information indicates the equivalent basis of the channel, where the equivalent basis of the channel is determined based on the characteristic weight and the eigenbasis.

The following separately describes the two cases.

In some embodiments, the network device may send, to the terminal device, the second indication information that carries the characteristic weight.

Specifically, after determining the characteristic weight of the channel in S602, the network device may generate the second indication information including the characteristic weight, and send the second indication information including the characteristic weight to the terminal device. In the foregoing technical solution, the terminal device may directly obtain the characteristic weight from the second indication information, and transform the pilot base sequence based on the characteristic weight, to obtain a pilot sequence, so that efficiency of generating the pilot sequence can be effectively improved, and efficiency of performing channel estimation by the base station can be effectively improved.

In some other embodiments, after determining the characteristic weight of the channel in S602, the network device may first determine the equivalent basis of the channel based on the characteristic weight and the eigenbasis, and then generate the second indication information indicating the equivalent basis of the channel, and send the second indication information to the terminal device. In the foregoing technical solution, the characteristic weight may be determined by indicating the equivalent basis. Because the equivalent basis is obtained through determining based on the eigenbasis and the characteristic weight, for example, the equivalent basis may be obtained by multiplying the eigenbasis by the characteristic weight, the characteristic weight may be obtained in a plurality of manners, so that diversity and flexibility of implementation of this solution are improved.

In an optional implementation, that the second indication information indicates the equivalent basis of the channel may include but is not limited to the following two cases.

A: The second indication information may include a DFT decomposition matrix of the equivalent basis of the channel, where the DFT decomposition matrix of the equivalent basis is a matrix formed by coefficients of the equivalent

basis in DFT domain after DFT transform is performed on the equivalent basis.

B: The second indication information may include the equivalent basis of the channel.

The following separately describes the two cases.

In some embodiments, after determining the characteristic weight of the channel in S602, the network device may first determine the equivalent basis of the channel based on the characteristic weight and the eigenbasis, and determine the DFT decomposition matrix of the equivalent basis of the channel based on the equivalent basis of the channel, and then generate second indication information including the DFT decomposition matrix of the equivalent basis of the channel, and send the second indication information including the DFT decomposition matrix of the equivalent basis of the channel to the terminal device. In the foregoing technical solution, the second indication information may indicate the equivalent basis of the channel based on the DFT decomposition matrix of the equivalent basis. Because a quantity of non-zero elements in the DFT decomposition matrix is less than a quantity of non-zero elements in the equivalent basis, overheads of the DFT decomposition matrix of the equivalent basis are less than those of the equivalent basis. Therefore, the characteristic weight is further determined by indicating the DFT decomposition matrix of the equivalent basis, so that signaling overheads in an interaction process can be further reduced, and fewer communication resources are used.

In some other embodiments, after determining the characteristic weight of the channel in S602, the network device may first determine the equivalent basis of the channel based on the characteristic weight and the eigenbasis, and then generate second indication information including the equivalent basis, and send the second indication information including the equivalent basis to the terminal device.

In an optional implementation, the eigenbasis may include a plurality of bases. Therefore, a process of determining the equivalent basis of the channel based on the characteristic weight and the eigenbasis may include but is not limited to the following two manners.

A: Determine the equivalent basis of the channel based on a pre-specified eigenbasis and the characteristic weight.

B: Determine the equivalent basis of the channel based on the characteristic weight and a first basis, where the first basis is a basis in the eigenbasis.

The following separately describes the foregoing two cases by using an example in which the second indication information includes the equivalent basis of the channel.

Specifically, in some embodiments, after determining the characteristic weight of the channel, the network device may first determine the equivalent basis of the channel based on the characteristic weight and the pre-specified eigenbasis according to Formula 1, and then generate second indication information indicating the equivalent basis, and send the second indication information including the equivalent basis to the terminal device.

$$D_{i1} = U_{i1} \odot P_i \text{ (Formula 1)}$$

$D_{i1}$ represents the equivalent basis, $U_{i1}$ represents the pre-specified eigenbasis, and $P_i$ represents the characteristic weight.

The pre-specified eigenbasis may be a basis predefined in a protocol. For example, that $U_{i1}$ is an eigenbasis corresponding to a largest eigenvalue in a plurality of eigenbases is predefined in the protocol, or that $U_{i1}$ is an eigenbasis corresponding to a smallest eigenvalue in a plurality of eigenbases is predefined in the protocol.

For example, in an embodiment, it is assumed that the pre-specified eigenbasis is a basis A. After determining the characteristic weight of the channel, the network device may first determine the equivalent basis of the channel based on the characteristic weight and the basis A, and then generate second indication information including the equivalent basis, and send the second indication information including the equivalent basis to the terminal device.

In some other embodiments, after determining the characteristic weight of the channel, the network device may first select a basis from the eigenbasis as the first basis, then determine the equivalent basis of the channel based on the characteristic weight and the first basis according to Formula 2, and then generate second indication information indicating the equivalent basis and the first basis, and send the second indication information including the equivalent basis to the terminal device.

$$D_{i1} = U_{ij} \odot P_i \text{ (Formula 2)}$$

$D_{i1}$ represents the equivalent basis, $U_{ij}$ represents the first basis, and $P_i$ represents the characteristic weight.

In an optional implementation, a process in which the network device selects a basis from the eigenbasis as the first basis may include but is not limited to the following two manners.

A: Select any basis from the eigenbases as the first basis.

B: Use a basis with smallest overheads in the equivalent basis corresponding to the eigenbasis as the first basis.

The following separately describes the two cases.

Specifically, in some embodiments, after determining the characteristic weight of the channel, the network device may first select any basis from the eigenbasis as the first basis, then determine the equivalent basis of the channel based on the characteristic weight and the first basis, and then generate second indication information indicating the equivalent basis and the first basis, and send the second indication information to the terminal device.

For example, in an embodiment, it is assumed that the basis selected by the network device from the eigenbasis is a basis C. In this case, the network device may determine the equivalent basis of the channel based on the characteristic weight and the basis C, and then generate the second indication information indicating the equivalent basis and the first basis, and send the second indication information to the terminal device.

In some other embodiments, after determining the characteristic weight of the channel, the network device may use the basis with the smallest overheads in the equivalent basis corresponding to the eigenbasis as the first basis, then determine the equivalent basis of the channel based on the characteristic weight and the first basis, and then generate second indication information indicating the equivalent basis and the first basis, and send the second indication information to the terminal device.

For example, in an embodiment, it is assumed that the basis with the smallest overheads in the equivalent basis corresponding to the eigenbasis is a basis B. The network device may determine the basis B as the first basis, and determine the equivalent basis of the channel based on the characteristic weight and the basis B, and then generate the second indication information indicating the equivalent basis and the first basis, and send the second indication information to the terminal device.

In the foregoing technical solution, the first basis is a basis in the eigenbasis, and the basis is an eigenbasis that is selected by the network device from the plurality of eigenbases and causes indication overheads of the equivalent basis to be small, so that signaling overheads in a process of indicating the equivalent basis can be further reduced.

In an optional implementation, each of a plurality of bases included in the eigenbasis has a corresponding basis sequence number. Correspondingly, that the second indication information indicates the first basis may include but is not limited to the following two cases.

A: The second indication information includes the first basis.

B: The second indication information includes a basis sequence number of the first basis.

The following separately describes the foregoing two cases by using an example in which the basis with the smallest overheads in the equivalent basis corresponding to the eigenbasis is used as the first basis.

Specifically, in some embodiments, after determining the characteristic weight of the channel, the network device may use the basis with the smallest overheads in the equivalent basis corresponding to the eigenbasis as the first basis, then determine the equivalent basis of the channel based on the characteristic weight and the first basis, and then generate second indication information including the equivalent basis and the first basis, and send the second indication information to the terminal device.

In some other embodiments, after determining the characteristic weight of the channel, the network device may use the basis with the smallest overheads in the equivalent basis corresponding to the eigenbasis as the first basis, then determine the equivalent basis of the channel based on the characteristic weight and the first basis, and then generate second indication information including the equivalent basis and the basis sequence number of the first basis, and send the second indication information to the terminal device.

S604: The terminal device obtains the characteristic weight of the channel between the terminal device and the network device.

The characteristic weight of the channel is determined by the network device based on the first indication information.

Specifically, after receiving the second indication information from the network device, the terminal device may obtain the characteristic weight of the channel between the terminal device and the network device based on the second indication information.

In an optional implementation, when the second indication information carries the characteristic weight, after receiving the second indication information, the terminal device may directly obtain the characteristic weight of the channel between the terminal device and the network device from the second indication information.

In an optional implementation, when the second indication information includes the DFT decomposition matrix of the equivalent basis of the channel, after receiving the second indication information, the terminal device may first determine the corresponding equivalent basis based on the DFT decomposition matrix in the second indication information, and then obtain the characteristic weight of the channel between the terminal device and the network device based on the pre-specified eigenbasis and the equivalent basis.

In an optional implementation, when the second indication information indicates the equivalent basis of the channel, after receiving the second indication information, the terminal device may obtain the characteristic weight of the channel between the terminal device and the network device based on the equivalent basis in the second indication information and the pre-specified eigenbasis.

For example, in an embodiment, it is assumed that the pre-specified eigenbasis is $U_{i1}$, the equivalent basis is $D_{i1}$,

where $U_{i1}$ may be represented by Formula 3, and $D_{i1}$ may be represented by Formula 4. The terminal device may determine the characteristic weight $P_i$ of the channel between the terminal device and the network device based on the equivalent basis $D_{i1}$ and the pre-specified eigenbasis $U_{i1}$ by Formula 5.

$$U_{i1} = \begin{pmatrix} U_{i1}^{1} \\ U_{i1}^{2} \\ \cdots \\ U_{i1}^{N} \end{pmatrix} \text{(Formula 3)}$$

$$D_{i1} = \begin{pmatrix} D_{i1}^{1} \\ D_{i1}^{2} \\ \cdots \\ D_{i1}^{N} \end{pmatrix} \text{(Formula 4)}$$

$$P_i = D_{i1} \oslash U_{i1} \text{ (Formula 5)}$$

$\oslash$ represents element-wise division, and N represents a quantity of REs.

In an optional implementation, when the second indication information includes the equivalent basis and the first basis of the channel, after receiving the second indication information, the terminal device may obtain the characteristic weight of the channel between the terminal device and the network device based on the equivalent basis and the first basis in the second indication information.

In an optional implementation, when the second indication information includes the equivalent basis of the channel and the basis sequence number of the first basis of the channel, after receiving the second indication information, the terminal device may first determine the first basis based on the basis sequence number in the second indication information, and then obtain the characteristic weight of the channel between the terminal device and the network device based on the equivalent basis and the first basis.

S605: The terminal device sends a first uplink reference signal to the network device, and correspondingly, the network device receives the first uplink reference signal from the terminal device.

The first uplink reference signal is determined based on the pilot base sequence and the characteristic weight.

For example, the terminal device determines the pilot sequence based on the pilot base sequence and a characteristic, where the pilot sequence forms the first uplink reference signal, and the terminal device sends the first uplink reference signal to the network device.

Correspondingly, after receiving the first uplink reference signal including the pilot sequence, the network device may perform channel estimation on the channel between the terminal device and the network device based on the eigenbasis of the channel and the pilot sequence.

After obtaining the characteristic weight in the manner shown in S604, the terminal device may first determine the pilot sequence based on the pilot base sequence and the characteristic weight, and then send the first uplink reference signal including the pilot sequence to the network device.

Specifically, after obtaining the characteristic weight, the terminal device determines the pilot sequence according to Formula 6.

$$L = x_i \odot P_i \text{ (Formula 6)}$$

$L$ represents the pilot sequence, $x_i$ represents the pilot base sequence, and $P_i$ represents the characteristic weight.

For example, it is assumed that Formula 7 represents the characteristic weight $P_i$ obtained by the terminal device, Formula 8 represents the pilot base sequence $x_i$, and the pilot sequence $L$ determined according to Formula 6 may be represented by Formula 9.

$$P_i = \begin{pmatrix} D_{i1}^{1} / U_{i1}^{1} \\ D_{i1}^{2} / U_{i1}^{2} \\ D_{i1}^{3} / U_{i1}^{3} \\ D_{i1}^{4} / U_{i1}^{4} \\ D_{i1}^{5} / U_{i1}^{5} \\ \cdots \\ D_{i1}^{\mathrm{N}} / U_{i1}^{\mathrm{N}} \end{pmatrix} \text{(Formula 7)}$$

$$x_i = \begin{pmatrix} x_1 \\ x_2 \\ x_3 \\ x_4 \\ x_5 \\ \cdots \\ x_N \end{pmatrix} \text{(Formula 8)}$$

$$L = \begin{pmatrix} x_1 * D_{i1}^{1} / U_{i1}^{1} \\ x_2 * D_{i1}^{2} / U_{i1}^{2} \\ x_3 * D_{i1}^{3} / U_{i1}^{3} \\ x_4 * D_{i1}^{4} / U_{i1}^{4} \\ x_5 * D_{i1}^{5} / U_{i1}^{5} \\ \cdots \\ x_N * D_{i1}^{\mathrm{N}} / U_{i1}^{\mathrm{N}} \end{pmatrix} \text{(Formula 9)}$$

After determining the pilot sequence in the foregoing manner, the terminal device may send the first uplink reference signal to the network device through a port i corresponding to the terminal device. After receiving the first uplink reference signal, the network device may determine, by using a channel estimation algorithm, an eigen-coefficient corresponding to the eigenbasis, and perform channel estimation on the channel between the terminal device and the network device based on the eigen-coefficient.

For example, in an embodiment, after receiving the first uplink reference signal, the network device may obtain Formula 12 according to Formula 10 and Formula 11, and then derive Formula 13 according to Formula 12, to obtain the eigen-coefficient corresponding to the eigenbasis, and perform channel estimation on the channel between the terminal device and the network device based on the eigen-coefficient.

$$y_k = \sum_i H_{ik} \odot P_i \odot x_i \text{ (Formula 10)}$$

$$H_{ik} = \sum_{j=1}^{J} c_{ijk} U_{ij} \text{ (Formula 11)}$$

$$y_k = \sum_i \sum_j c_{ijk} U_{ij} \odot P_i \odot x_i \text{ (Formula 12)}$$

$$(U_{ij} \odot P_i)^H (y_k \oslash x) = |U_{ij} \odot P_i|^2 c_{ijk} + \sum_{mn \neq ij} (U_{ij} \odot P_i)^H (U_{mn} \odot P_m) c_{mnk} \text{ (Formula 13)}$$

$H_{ik}$ represents a channel between the port i of the terminal device and an antenna k of the network device. $c_{ijk}$ represents eigen-coefficients of the port i of the terminal device and the antenna k of the network device on the eigenbasis j, and $c_{ijk} = (c_1, c_2, \ldots, c_B, 0,0, \ldots, 0)^T$. $y_k$ represents a received signal.

Optionally, if a design of the characteristic weight meets a condition $(U_{ij} \odot P_i)^H (U_{mn} \odot P_m) = 0, \forall i \neq m, \forall j \neq n,$ Formula 13 may be represented by Formula 14.

$$(U_{ij} \odot P_i)^H (y_k \oslash x) = |U_{ij} \odot P_i|^2 c_{ijk}, \text{ that is, } c_{ijk} = (U_{ij} \odot P_i)^H (y_k \oslash x) / |U_{ij} \odot P_i|^2$$

$$\text{(Formula 14)}$$

In this embodiment of this application, $U_{ij}$ may be an eigenvector obtained after singular value decomposition is performed on a statistical covariance matrix $E(HH^H)$ of H.

In this embodiment of this application, a plurality of antennas of the network device may share a group of eigenbases, but different antennas correspond to different eigen-coefficients.

In the foregoing technical solution, the pilot sequence is generated based on the pilot base sequence and the characteristic weight, and the characteristic weight is determined by the network device based on the channel characteristic of the channel. It can be learned that, in this application, the characteristic weight is not simply obtained from a DFT matrix, but is determined based on the channel characteristic of the channel. To be specific, the network device may design the characteristic weight based on the channel characteristic, to make the characteristic weight better meet the channel characteristic of the corresponding channel. In other words, a capability of multiplexing uplink reference signals corresponding to the characteristic weight in the channel characteristic is optimal. Therefore, according to the channel estimation method provided in this application, the code division multiplexing capability present when the uplink reference signals are transmitted on the same pilot resource or channel can be effectively improved, so that uplink reference signals can still be transmitted to a base station in a timely manner when a quantity of the uplink reference signals is excessively large.

Optionally, an embodiment of this application provides a schematic flowchart of a channel estimation method. The method is applied to a terminal device. The method includes the following step A to step C.

Step A: Report first indication information to a network device.

The first indication information indicates a channel characteristic of a channel between the terminal device and the network device.

Step B: Obtain a characteristic weight of the channel between the terminal device and the network device.

The characteristic weight of the channel is determined by the network device based on the first indication information.

Step C: Send a first uplink reference signal to the network device.

The first uplink reference signal is determined based on a pilot base sequence of the terminal device and the characteristic weight.

Optionally, an embodiment of this application provides a schematic flowchart of a channel estimation method. The method is applied to a network device. The method includes the following step D to step F.

Step D: Receive first indication information from a terminal device.

The first indication information indicates a channel characteristic of a channel between the terminal device and the network device.

Step E: Determine a characteristic weight of the channel based on the first indication information.

Step F: Send second indication information to the terminal device.

The second indication information indicates the characteristic weight.

FIG. 7 is a diagram of a structure of a channel estimation apparatus according to an embodiment of this application. The data sending apparatus is located in a terminal device, and includes a transceiver module 701 and a processing module 702.

The transceiver module 701 is configured to report first indication information to a network device, where the first

indication information indicates a channel characteristic of a channel between the terminal device and the network device.

The processing module 702 is configured to obtain a characteristic weight of the channel between the terminal device and the network device, where the characteristic weight of the channel is determined based on the first indication information.

The processing module 702 is further configured to generate a first uplink reference signal, where the first uplink reference signal is determined based on a pilot base sequence of the terminal device and the characteristic weight.

The transceiver module 701 is further configured to send the first uplink reference signal to the network device.

In an optional implementation, the first indication information indicates an eigenbasis of the channel, or the first indication information indicates a second uplink reference signal.

In an optional implementation, the channel includes a time-domain channel, and the eigenbasis of the channel includes a time-domain basis; the channel includes a frequency-domain channel, and the eigenbasis of the channel includes a frequency-domain basis; or the channel includes a time-frequency-domain channel, and the eigenbasis of the channel includes a time-frequency-domain basis.

In an optional implementation, the transceiver module 701 is further configured to receive second indication information, where the second indication information indicates the characteristic weight.

The processing module 702 is further configured to obtain the characteristic weight of the channel between the terminal device and the network device based on the second indication information.

In an optional implementation, the transceiver module 701 is further configured to receive second indication information, where the second indication information indicates an equivalent basis of the channel.

The processing module 702 is further configured to obtain the characteristic weight of the channel between the terminal device and the network device based on the equivalent basis and the eigenbasis.

In an optional implementation, the eigenbasis includes a plurality of bases, the second indication information further indicates a first basis, and the first basis is a basis in the eigenbases. The processing module 702 is further configured to determine the characteristic weight of the channel between the terminal device and the network device based on the equivalent basis and the first basis.

In an optional implementation, the second indication information indicates a DFT decomposition matrix of the equivalent basis of the channel.

In an optional implementation, the transceiver module 701 is further configured to receive a downlink reference signal from the network device.

The processing module 702 is further configured to determine the eigenbasis of the channel based on the downlink reference signal.

FIG. 8 is a diagram of a structure of a channel estimation apparatus according to an embodiment of this application. The data sending apparatus is located in a network device, and includes a transceiver module 801 and a processing module 802.

The transceiver module 801 is configured to receive first indication information from a terminal device, where the first indication information indicates a channel characteristic of a channel between the terminal device and the network device.

The processing module 802 is configured to determine a characteristic weight of the channel based on the first indication information.

The transceiver module 801 is further configured to send second indication information to the terminal device. The second indication information indicates the characteristic weight.

In an optional implementation, the first indication information indicates an eigenbasis of the channel, or the first indication information indicates an uplink reference signal.

In an optional implementation, the channel includes a time-domain channel, and the eigenbasis of the channel includes a time-domain basis; the channel includes a frequency-domain channel, and the eigenbasis of the channel includes a frequency-domain basis; or the channel includes a time-frequency-domain channel, and the eigenbasis of the channel includes a time-frequency-domain basis.

In an optional implementation, the transceiver module 701 is specifically configured to send, to the terminal device, the second indication information that carries the characteristic weight.

In an optional implementation, the second indication information indicates an equivalent basis of the channel, and the equivalent basis of the channel is determined based on the characteristic weight and the eigenbasis.

In an optional implementation, the eigenbasis includes a plurality of bases, the second indication information further indicates a first basis, the first basis is a basis in the eigenbasis, and the equivalent basis of the channel is determined based on the characteristic weight and the first basis.

In an optional implementation, the second indication information indicates a DFT decomposition matrix of the equivalent basis of the channel.

In an optional implementation, the transceiver module 801 is further configured to receive a first uplink reference signal from the terminal device.

The processing module 802 is further configured to perform channel estimation on the channel between the terminal device and the network device based on the eigenbasis of the channel and the first uplink reference signal.

An embodiment of this application further provides a chip. A control circuit and one or more ports that are configured to implement a function of the foregoing network evaluation apparatus are integrated in the chip. Optionally, for a function supported by the chip, refer to the foregoing descriptions. Details are not described herein again. A person of ordinary skill in the art may understand that all or a part of the steps of the foregoing embodiments may be implemented by a program instructing related hardware. The program may be stored in a computer-readable storage medium. The storage medium mentioned above may be a read-only memory, a random access memory, or the like. The foregoing processing unit or processor may be a central processing unit, a general-purpose processor, an application-specific integrated circuit (application-specific integrated circuit, ASIC), a microprocessor (digital signal processor, DSP), a field programmable gate array (field programmable gate array, FPGA) or another programmable logic device, a transistor logic device, a hardware component, or any combination thereof.

An embodiment of this application further provides a computer program product that includes instructions. When the instructions are run on a computer, the computer is enabled to perform any one of the methods in the foregoing embodiments. The computer program product includes one or more computer instructions. When the computer program instructions are loaded and executed on the computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, an SSD), or the like.

It should be noted that the foregoing components that are provided in embodiments of this application and that are configured to store the computer instructions or the computer program, for example but not limited to, the foregoing memory, computer-readable storage medium, and communication chip, are all non-transitory (non-transitory).

All or a part of the foregoing embodiments may be implemented by software, hardware, firmware, or any combination thereof. When a software program is used to implement embodiments, all or a part of embodiments may be implemented in a form of computer program product. The computer program product includes one or more computer instructions. When the computer program instructions are loaded and executed on the computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Although this application is described with reference to embodiments, in a process of implementing this application that claims protection, a person skilled in the art may understand and implement other variations of the disclosed embodiments by viewing the accompanying drawings, the disclosed content, and the appended claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the spirit and scope of this application. Correspondingly, this specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined

by the following claims and their equivalent technologies.

## Claims

1. A channel estimation method, applied to a terminal device, wherein the method comprises:

   reporting first indication information to a network device, wherein the first indication information indicates a channel characteristic of a channel between the terminal device and the network device;
   obtaining a characteristic weight of the channel between the terminal device and the network device, wherein the characteristic weight of the channel is determined based on the first indication information; and
   sending a first uplink reference signal to the network device, wherein the first uplink reference signal is determined based on a pilot base sequence of the terminal device and the characteristic weight.

2. The method according to claim 1, wherein the first indication information indicates an eigenbasis of the channel, or the first indication information indicates a second uplink reference signal.

3. The method according to claim 2, wherein the channel comprises a time-domain channel, and the eigenbasis of the channel comprises a time-domain basis; the channel comprises a frequency-domain channel, and the eigenbasis of the channel comprises a frequency-domain basis; or the channel comprises a time-frequency-domain channel, and the eigenbasis of the channel comprises a time-frequency-domain basis.

4. The method according to claim 1, wherein obtaining the characteristic weight of the channel between the terminal device and the network device comprises:

   receiving second indication information, wherein the second indication information indicates the characteristic weight; and
   obtaining the characteristic weight of the channel between the terminal device and the network device based on the second indication information.

5. The method according to claim 1, wherein obtaining the characteristic weight of the channel between the terminal device and the network device comprises:

   receiving second indication information, wherein the second indication information indicates an equivalent basis of the channel; and
   determining the characteristic weight of the channel between the terminal device and the network device based on the equivalent basis and an eigenbasis.

6. The method according to claim 5, wherein the eigenbasis comprises a plurality of bases, the second indication information further indicates a first basis, and the first basis is a basis in the eigenbasis; and
   determining the characteristic weight of the channel between the terminal device and the network device based on the equivalent basis and the eigenbasis comprises:
   determining the characteristic weight of the channel between the terminal device and the network device based on the equivalent basis and the first basis.

7. The method according to claim 5 or 6, wherein the second indication information indicates a discrete Fourier transform DFT decomposition matrix of the equivalent basis of the channel.

8. The method according to any one of claims 1 to 7, wherein the method further comprises:

   receiving a downlink reference signal from the network device; and
   determining the eigenbasis of the channel based on the downlink reference signal.

9. A channel estimation method, applied to a network device, wherein the method comprises:

   receiving first indication information from a terminal device, wherein the first indication information indicates a channel characteristic of a channel between the terminal device and the network device;
   determining a characteristic weight of the channel based on the first indication information; and

sending second indication information to the terminal device, wherein the second indication information indicates the characteristic weight.

**10.** The method according to claim 9, wherein the first indication information indicates an eigenbasis of the channel, or the first indication information indicates a second uplink reference signal.

**11.** The method according to claim 9, wherein the channel comprises a time-domain channel, and an eigenbasis of the channel comprises a time-domain basis; the channel comprises a frequency-domain channel, and an eigenbasis of the channel comprises a frequency-domain basis; or the channel comprises a time-frequency-domain channel, and an eigenbasis of the channel comprises a time-frequency-domain basis.

**12.** The method according to claim 9, wherein sending the second indication information to the terminal device comprises: sending, to the terminal device, the second indication information that carries the characteristic weight.

**13.** The method according to claim 9, wherein the second indication information indicates an equivalent basis of the channel, and the equivalent basis of the channel is determined based on the characteristic weight and the eigenbasis.

**14.** The method according to claim 13, wherein the eigenbasis comprises a plurality of bases, the second indication information further indicates a first basis, the first basis is a basis in the eigenbasis, and the equivalent basis of the channel is determined based on the characteristic weight and the first basis.

**15.** The method according to claim 13 or 14, wherein the second indication information indicates a discrete Fourier transform DFT decomposition matrix of the equivalent basis of the channel.

**16.** The method according to any one of claims 9 to 15, wherein the method further comprises:

receiving a first uplink reference signal from the terminal device; and
performing channel estimation on the channel between the terminal device and the network device based on the eigenbasis of the channel and the first uplink reference signal.

**17.** A channel estimation apparatus, wherein the apparatus is located in a terminal device, and the apparatus comprises:

a transceiver module, configured to report first indication information to a network device, wherein the first indication information indicates a channel characteristic of a channel between the terminal device and the network device; and
a processing module, configured to obtain a characteristic weight of the channel between the terminal device and the network device, wherein the characteristic weight of the channel is determined based on the first indication information, wherein
the processing module is further configured to generate a first uplink reference signal, wherein the first uplink reference signal is determined based on a pilot base sequence of the terminal device and the characteristic weight; and
the transceiver module is further configured to send the first uplink reference signal to the network device.

**18.** The apparatus according to claim 17, wherein the first indication information indicates an eigenbasis of the channel, or the first indication information indicates a second uplink reference signal.

**19.** The apparatus according to claim 18, wherein the channel comprises a time-domain channel, and the eigenbasis of the channel comprises a time-domain basis; the channel comprises a frequency-domain channel, and the eigenbasis of the channel comprises a frequency-domain basis; or the channel comprises a time-frequency-domain channel, and the eigenbasis of the channel comprises a time-frequency-domain basis.

**20.** The apparatus according to claim 17, wherein the transceiver module is further configured to:

receive second indication information, wherein the second indication information indicates the characteristic weight; and
the processing module is further configured to obtain the characteristic weight of the channel between the terminal device and the network device based on the second indication information.

**21.** The apparatus according to claim 17, wherein the transceiver module is further configured to:

receive second indication information, wherein the second indication information indicates an equivalent basis of the channel; and
the processing module is further configured to obtain the characteristic weight of the channel between the terminal device and the network device based on the equivalent basis and an eigenbasis.

**22.** The apparatus according to claim 21, wherein the eigenbasis comprises a plurality of bases, the second indication information further indicates a first basis, the first basis is a basis in the eigenbasis, and the processing module is further configured to:
obtain the characteristic weight of the channel between the terminal device and the network device based on the equivalent basis and the first basis.

**23.** The apparatus according to claim 21 or 22, wherein the second indication information indicates a discrete Fourier transform DFT decomposition matrix of the equivalent basis of the channel.

**24.** The apparatus according to any one of claims 17 to 23, wherein the transceiver module is further configured to:

receive a downlink reference signal from the network device; and
the processing module is further configured to determine the eigenbasis of the channel based on the downlink reference signal.

**25.** A channel estimation apparatus, wherein the apparatus is located in a network device, and the apparatus comprises:

a transceiver module, configured to receive first indication information from a terminal device, wherein the first indication information indicates a channel characteristic of a channel between the terminal device and the network device; and
a processing module, configured to determine a characteristic weight of the channel based on the first indication information, wherein
the transceiver module is further configured to send second indication information to the terminal device, wherein the second indication information indicates the characteristic weight.

**26.** The apparatus according to claim 25, wherein the first indication information indicates an eigenbasis of the channel, or the first indication information indicates a second uplink reference signal.

**27.** The apparatus according to claim 25, wherein the channel comprises a time-domain channel, and an eigenbasis of the channel comprises a time-domain basis; the channel comprises a frequency-domain channel, and an eigenbasis of the channel comprises a frequency-domain basis; or the channel comprises a time-frequency-domain channel, and an eigenbasis of the channel comprises a time-frequency-domain basis.

**28.** The apparatus according to claim 25, wherein the transceiver module is specifically configured to:
send, to the terminal device, the second indication information that carries the characteristic weight.

**29.** The apparatus according to claim 25, wherein the second indication information indicates an equivalent basis of the channel, and the equivalent basis of the channel is determined based on the characteristic weight and the eigenbasis.

**30.** The apparatus according to claim 29, wherein the eigenbasis comprises a plurality of bases, the second indication information further indicates a first basis, the first basis is a basis in the eigenbasis, and the equivalent basis of the channel is determined based on the characteristic weight and the first basis.

**31.** The apparatus according to claim 29 or 30, wherein the second indication information indicates a discrete Fourier transform DFT decomposition matrix of the equivalent basis of the channel.

**32.** The apparatus according to any one of claims 25 to 31, wherein the transceiver module is further configured to:

receive a first uplink reference signal from the terminal device; and
the processing module is further configured to perform channel estimation on the channel between the terminal device and the network device based on the eigenbasis of the channel and the first uplink reference signal.

**33.** A communication apparatus, wherein the communication apparatus comprises at least one processor, and the at least one processor is coupled to at least one memory; and
the at least one processor is configured to execute a computer program or instructions stored in the at least one memory, to enable the communication apparatus to perform the channel estimation method according to any one of claims 1 to 16.

**34.** The communication apparatus according to claim 33, wherein the communication apparatus is a chip.

**35.** A communication system, wherein the system comprises a terminal device and a network device, wherein

the terminal device is configured to perform the channel estimation method according to any one of claims 1 to 8; and
the network device is configured to perform the channel estimation method according to any one of claims 9 to 16.

**36.** A computer-readable storage medium, comprising program code, wherein when the program code is run on a computer or a processor, the computer or the processor is enabled to perform the channel estimation method according to any one of claims 1 to 16.

Send signaling including channel sounding estimation configuration information
Base station
Send a pilot
UE
Send downlink data

FIG. 1

Frequency division
Comb frequency division
RB frequency division
Code division
Time division
ue0
ue1
S
...
Time domain

FIG. 2

Pilot A
Delay domain
Pilot B
Delay domain
Move
Delay domain
Delay domain
Delay domain

FIG. 3

401
UE 1
UE 2
UE 3
UE 4
UE 5
UE 6

FIG. 4

Base station
RRC module
MAC module
PHY module
Terminal device
RRC module
MAC module
PHY module

FIG. 5

Network device
Terminal device
S601: First indication information
S602: Determine a characteristic weight of a channel based on the first indication information
S603: Second indication information
S604: Obtain the characteristic weight of the channel between the terminal device and the network device
S605: First uplink reference signal

FIG. 6

Channel estimation apparatus
Transceiver module 701
Processing module 702

FIG. 7

Channel estimation apparatus
Transceiver module 801
Processing module 802

FIG. 8

**INTERNATIONAL SEARCH REPORT**

International application No. **PCT/CN2024/127823**

**A. CLASSIFICATION OF SUBJECT MATTER**

H04L 25/02(2006.01)i

According to International Patent Classification (IPC) or to both national classification and IPC

**B. FIELDS SEARCHED**

Minimum documentation searched (classification system followed by classification symbols)

IPC: H04L, H04W, G06F

Documentation searched other than minimum documentation to the extent that such documents are included in the fields searched

Electronic data base consulted during the international search (name of data base and, where practicable, search terms used)

CNKI, CNTXT, ENTXTC, ENTXT, VEN, DWPI, 3GPP, IEEE: 信道特征, 特征权值, 基底, 等效基底, 导频, 基序列, 等效信道, 码分复用, 复用, 变换域, 时延域, 容量, 提高, 增强, 优化, 权值, 加权, 因子, 系数, 导频, 隐式, 显式, 矩阵, basis, equivalent basis, pilot, sequence, equivalent channel, code division multiplexing, multiplex+, transform domain, latency domain, capacity, improv+, enhanc+, optimiz+, weight, factor, coefficient, DFT, MIMO, implicit, explicit, matrix

**C. DOCUMENTS CONSIDERED TO BE RELEVANT**

| Category* | Citation of document, with indication, where appropriate, of the relevant passages | Relevant to claim No. |
|---|---|---|
| X | CN 110024343 A (TELEFONAKTIEBOLAGET LM ERICSSON (PUBL)) 16 July 2019 (2019-07-16)<br>description, paragraphs 65-92 | 1-36 |
| A | CN 110166087 A (SOUTHEAST UNIVERSITY) 23 August 2019 (2019-08-23)<br>entire document | 1-36 |
| A | CN 107294674 A (CHINA ACADEMY OF TELECOMMUNICATIONS TECHNOLOGY) 24 October 2017 (2017-10-24)<br>entire document | 1-36 |
| A | WO 2010048129 A1 (INTERDIGITAL PATENT HOLDINGS et al.) 29 April 2010 (2010-04-29)<br>entire document | 1-36 |

☐ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 December 2024** | **12 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/127823**

| Patent document cited in search report | Publication date (day/month/year) | Patent family member(s) | Publication date (day/month/year) |
|---|---|---|---|
| CN 110024343 A | 16 July 2019 | US 2018302905 A1 | 18 October 2018 |
| | | US 10412745 B2 | 10 September 2019 |
| | | WO 2018101863 A1 | 07 June 2018 |
| | | EP 3549317 A1 | 09 October 2019 |
| | | EP 3549317 B1 | 21 July 2021 |
| CN 110166087 A | 23 August 2019 | None | |
| CN 107294674 A | 24 October 2017 | WO 2017166902 A1 | 05 October 2017 |
| | | KR 20180131585 A | 10 December 2018 |
| | | KR 102223707 B1 | 04 March 2021 |
| | | JP 2019511881 A | 25 April 2019 |
| | | JP 6828985 B2 | 10 February 2021 |
| | | US 2019349167 A1 | 14 November 2019 |
| | | US 10651999 B2 | 12 May 2020 |
| | | EP 3439217 A1 | 06 February 2019 |
| | | EP 3439217 A4 | 17 April 2019 |
| | | EP 3439217 B1 | 07 July 2021 |
| | | EP 3439217 B8 | 18 August 2021 |
| WO 2010048129 A1 | 29 April 2010 | TW 201125304 A | 16 July 2011 |
| | | AR 073834 A1 | 01 December 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311469859